Europäisches Patentamt

European Patent Office

Office européen des brevets

(11) Veröffentlichungsnummer: **0 518 221 A1**

## EUROPÄISCHE PATENTANMELDUNG

(21) Anmeldenummer: **92109494.2**

(22) Anmeldetag: **04.06.92**

(51) Int. Cl.5: **B01D 45/08**, B01D 45/10

(30) Priorität: **11.06.91 DE 4119216**

(43) Veröffentlichungstag der Anmeldung:
**16.12.92 Patentblatt 92/51**

(84) Benannte Vertragsstaaten:
**AT DE ES FR GB IT SE**

(71) Anmelder: **Wurz, Dieter, Prof. Dr.-Ing.
Gartenweg 7
W-7570 Baden-Baden(DE)**

(72) Erfinder: **Wurz, Dieter, Prof. Dr.-Ing.
Gartenweg 7
W-7570 Baden-Baden(DE)**

(74) Vertreter: **Liesegang, Roland, Dr.-Ing. et al
FORRESTER & BOEHMERT
Franz-Joseph-Strasse 38
W-8000 München 40(DE)**

(54) **Tropfenabscheider.**

(57) Ein Tropfenabscheider mit Lamellen (2), welche Fangtaschen (12, 16) für aus einer feststoff- und/oder flüssigkeitsbeladenen Gasströmung abzuscheidende Tropfen aufweist, zeichnet sich dadurch aus, daß jede Lamelle (2) wenigstens zwei Fangtaschen (12, 16) hat, welche derart angeordnet und ausgebildet sind, daß ihre Orthogonal-Projektion auf die Eintrittsebene (E) das Strömungsfeld im wesentlichen überdeckt

Fig. 2

Die Erfindung betrifft einen Tropfenabscheider mit Lamellen, welche Fangtaschen für aus einer feststoff- oder flüssigkeitsbeladenen Gasströmung abzuscheidende Tropfen aufweisen. Solche Tropfenabscheider werden z. B. in Rauchgaswaschanlagen eingesetzt.

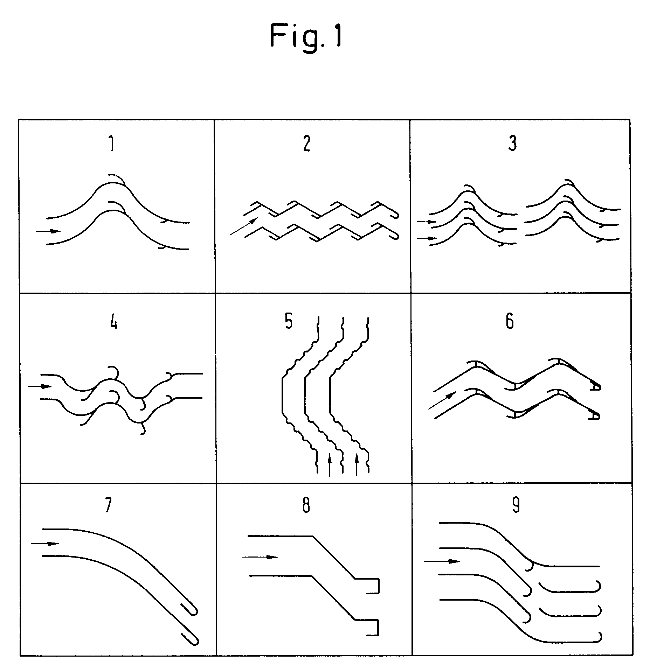

Figur 1 zeigt typische Vertreter aus der Familie der Lamellen-Tropfenabscheider. Die Tropfen, die in der Gasströmung enthalten sind, werden in den Strömungsumlenkungen, die von den gekrümmten Lamellen erzwungen werden, auf die Lamellenoberfläche "ausgeschleudert". Die dabei gebildeten Flüssigkeitsfilme fließen auf der Lamellenoberfläche unter Schwerkrafteinfluß in einen Sammelbehälter ab.

Während die Tropfenabscheidung bei reinen Flüssigkeiten in der Regel keine Probleme bereitet, treten bei der Abscheidung von Feststoffsuspensionen erhebliche Schwierigkeiten auf. Suspendierte Feststoffe sowie gelöste Stoffe, die beim Verdampfen der Trägerflüssigkeit ausfallen, können, unterstützt durch chemische Reaktionen, zu harten und fest haftenden Belägen auf den Tropfenabscheider aufwachsen. Durch solche Beläge kann die Funktion des Tropfenabscheiders stark gestört werden. Während sehr dünne Beläge (einige Zehntelmillimeter) aufgrund erhöhter Rauhigkeit der Oberfläche sowie verbesserter Benetzbarkeit sogar eine Verbesserung der Abscheidung bewirken können, verursachen dickere Beläge nicht nur einen erheblichen Druckverlust, sondern beeinträchtigen die Tropfenabscheider bis hin zu gravierenden Betriebsstörungen, die ein häufiges Abschalten erzwingen, um in der Betriebspause eine kostspielige Abreinigung der Lamellen vornehmen zu können.

Belagbildung bzw. Inkrustierung versucht man dadurch zu vermeiden, daß man den Tropfenabscheider in gewissen Zeitabständen mit Prozeßzusatzwasser, gelegentlich auch mit Suspensionsfiltrat spült. Damit die Prozeßwasserbilanz nicht gestört wird, darf bei Verwendung von Zusatzwasser die Spülwassermenge gewisse Grenzen nicht überschreiten.

Der unter Position 1 in Figur 1 dargestellte Lamellentyp wird insbesondere in den Waschtürmen von Rauchgasentschwefelungsanlagen zur Abscheidung von feststoffhaltigen Suspensionen eingesetzt. Die vordere Fangtasche neigt weniger zu Inkrustierungen, da sie sowohl durch die aufprallenden Absorbersuspensionstropfen als auch durch den anstromseitigen Spülflüssigkeitsstrahl intensiv beaufschlagt und somit abgereinigt wird. Vor der hinteren, kleineren Fangtasche bilden sich jedoch in der Regel schon nach einer relativ kurzen Betriebszeit erhebliche Beläge, so daß die hintere Fangtasche ihre Aufgabe nicht mehr erfüllen kann. Dies rührt daher, daß die abgelagerte Inkrustierung mit dem Spülflüssigkeitsstrahl nicht oder jedenfalls nicht direkt zu erreichen ist und darüber hinaus überwiegend kleine Tropfen diesen Abschnitt erreichen, die durch Teilverdunstung einen höheren Feststoffgehalt aufweisen als die großen Tropfen.

Der Erfindung liegt folgende Aufgabe zugrunde:
Es soll ein Tropfenabscheider geschaffen werden, der bei weitestgehender und kostengünstiger Tropfenabscheidung auch im laufenden Betrieb der Anlage wesentlich besser abzureinigen ist als die bisher bekannten Tropfenabscheider. Insbesondere sollen alle abscheidewirksamen und inkrustierungsgefährdeten Bereiche von der Spülflüssigkeit mit hohem Impuls möglichst direkt erreicht werden können, also nicht erst nach einer impulsverzehrenden Stoßwechselwirkung mit davorliegenden Lamellenabschnitten. Es versteht sich, daß die primäre Aufgabe, eine weitestgehende und kostengünstige Tropfenabscheidung bei möglichst geringem Druckverlust zu erzielen, durch die Verbesserung der Abreinigbarkeit nicht oder jedenfalls nicht unangemessen beeinträchtigt werden darf.

Diese Aufgabe ist durch Anspruch 1 gelöst.

Die neue Lamellengestaltung gemäß der Erfindung bewirkt, daß die in die Lamellen eintretenden Tropfen in direktem Fluge, also ohne vorher Flüssigkeitsfilme an den Lamellenwänden zu bilden, tief in die Fangtaschen eindringen, nahezu sämtlich in deren Gründen aufgefangen werden und von dort aufgrund von Schwerkraftwirkung infolge geneigter oder vertikaler Anordnung der Lamellen abströmen. Auch Tropfenfragmente, die beim Aufprall auf den Grund der Fangtasche entstehen, können nicht mehr aus der Fangtasche austreten. Die Fangtaschen sind sehr einfach mittels eines Spülstrahles von der Eintrittseite des Tropfenabscheiders abreinigbar.

Gemäß einer vorteilhaften Ausgestaltung der Erfindung hat jede Lamelle einen Frontbereich, welcher gegenüber den übrigen Teilen der Lamelle um 0,5 - 2 Lamellenteilungen nach vorne entgegen der Anströmrichtung vorsteht. Hierdurch wird eine Ausrichtung der Gasströmung bewirkt. Insbesondere die großen Tropfen, die sich aufgrund ihrer großen Trägheit nicht schnell genug an die der Gasströmung aufgezwungene Richtung anpassen können und die daher nach wie vor schräg in den Tropfenabscheider eintreten, prallen bereits hier auf die Lamellenwände, sei es von rechts oder von links je nach ihrer Flugrichtung. Dabei gebildete Tropfenfragmente, die von der Oberfläche zurückspritzen und einen relevanten Prozentsatz der Ursprungsmasse des großen Tropfens beinhalten, sollen daran gehindert werden, in den hinteren, schwerer abzureinigenden Kanal zwischen benachbarten Abscheiderlamellen getragen zu werden. Dies gelingt dadurch, daß die Strömung durch die erste Fangtasche zur Bauchseite der Hauptlamelle gelenkt wird, so daß diese kleinen Tropfenfragmente auf der Lamelle selbst oder in der nachfolgenden zweiten Fangtasche abgeschieden werden können. Würden die großen Tropfen aufgrund einer zu kurz ausgeführten Lamelle auf dem Rücken der ersten Fangtasche oder kurz vor der zweiten Fangtasche auf der Lamelle aufprallen, würde ein viel größerer Tropfenfragmentanteil zunächst auf die Außenseite der ersten Fangschaufel und damit in den hinteren Bereich der Lamelle getragen werden. Wenn dort keine Fangtasche mehr angeordnet ist, gelangt diese Flüssigkeitsmenge zum Austritt des Tropfenabscheiders und entzieht sich somit der Abscheidung. Würde zur Vermeidung dieses Nachteiles austrittsseitig noch eine kleine, zum Eintritt des Tropfenabscheiders hin geöffnete Fangtasche angebracht, um diese Flüssigkeit abzuleiten, ergäben sich Probleme bei der Abreinigung dieser Fangtasche: sie ist von hinten nicht mit einem Spülstrahl zu erreichen und von vorne nur unter Voraussetzungen, die eine abscheidewirksame Gestaltung des Tropfenabscheiders beeinträchtigen.

Nun läßt sich aber trotz eines vorstehenden Frontbereiches der Lamelle nicht vollständig verhindern, daß es zum Eintrag einer kleinen Tropfenteilmenge in den rückwärtigen Bereich der Lamellen kommt. Bei hohen Ansprüchen an den Tropfenabscheidegrad kann es notwendig sein, diese Teilmenge auch noch abzuscheiden. Hierzu dient die Weiterbildung der Erfindung gemäß Anspruch 2. Dabei ist austrittsseitig je Lamelle mindestens im Endflügel vorgesehen. Die Flüssigkeit, die auf den Rücken einer Lamelle gelangt, kann durch die Engstelle zwischen Lamelle und Endflügel durchtreten: gleichzeitig strömt etwas Rauchgas mit hindurch. Hinter jeder Engstelle erweitert sich der Kanal zwischen Lamelle und Endflügel so weit, daß sich die Gasgeschwindigkeit stark verzögert (z. B. von 10 ms$^{-1}$ auf ca. 1 ms$^{-1}$) und die Flüssigkeit in diesen strömungsberuhigten Raum unter Schwerkrafteinfluß abfließen kann. Die Endflügel werden vorteilhaft über den austrittsseitigen Distanzhalter fixiert oder über Distanzhalter mit der Lamelle verbunden. Ein wesentlicher Vorteil dieser Konfiguration liegt darin, daß der strömungsberuhigte Raum, in welchem die abgeschiedene Flüssigkeitsmenge abfließt, mit einem Spülstrahl von der Austrittsseite des Tropfenabscheiders her optimal abgereinigt werden kann.

In einer weiteren Ausgestaltung der Erfindung ist ein etwas kleinerer, zweiter Endflügel vorgesehen, und zwar dergestalt, daß auch noch die geringe Wassermenge erfaßt wird, die auf die Außenseite des ersten Endflügels gelangt.

Gemäß einer weiteren, reinigungsfreundlichen Ausgestaltung der eben beschriebenen Konfiguration sind die beiden zu jeder Lamelle gehörenden Endflügel so profiliert und angestellt, daß sich der Querschnitt des Hauptströmungskanals zwischen zwei benachbarten Endflügeln zum Austritt hin düsenartig verjüngt. Die dadurch bei angepaßter Dimensionierung erzeugte Druckverteilung bewirkt, daß ein geringer Gasstrom an den Engstellen zwischen den Endflügeln und der Hauptlamelle durchtritt und den Flüssigkeitsfilm in den strömungsberuhigten Raum zwischen den Endflügeln und der Lamelle befördert, wo er ungestört unter Schwerkrafteinfluß abfließen kann. Der Distanzhalter ist dabei so zu gestalten, daß das Abfließen des Flüssigkeitsfilmes nicht beeinträchtigt wird.

Ein weiterer Vorteil der neuartigen Konfiguration liegt darin, daß bei gleichen Lamellenlängen mit einer Teilung T von ca. 40 mm noch ähnlich gute bzw. bessere Abscheidegrade zu erzielen sind als bei herkömmlichen Systemen mit einer Teilung T von ca. 30 mm. Trotz Anordnung einer Zweitlamelle oder von zwei Endflügeln je Lamelle ist der Materialeinsatz für den neuen, abreinigungsfreundlichen Tropfenabscheider wegen der größeren realisierbaren Teilung nicht größer als bei den üblichen Tropfenabscheidern.

Gemäß einer weiteren Ausgestaltung der Erfindung sind die Lamellen als Hohlprofile ausgeführt. Durch Beaufschlagung der Hohlräume in den Lamellen mit Wasser, dessen Temperatur etwas unterhalb der Taupunktstemperatur des Rauchgases liegt, wird ein Wandkondensatfilm erzeugt, der eine hervorragende Abreinigungswirkung haben kann. Die Wasserbilanz des Prozesses wird dadurch nur geringfügig belastet, da nicht die gesamte Rauchgasmenge abgekühlt wird, sondern nur eine lamellennahe Strömungsgrenzschicht. Abgesehen davon dürfte die Einsparung an Tropfenabscheider-Spülwasser die anfallende Kondensatmenge mehr als kompensieren. Diese Kondensationsspülung der Lamellen ist natürlich erst dadurch möglich geworden, daß die Kondensatfilme, soweit sie stromab der Fangtaschenöffnungen entstehen, von der Schubspannung der Gasströmung zur Lamellenhinterkante getrieben werden, mit einer Vorrichtung gemäß der vorliegenden Erfindung im Hinterkantenbereich abgeleitet werden können.g ist in folgenden anhand schematischer Zeichnungen und einer Tabelle mit weiteren Einzelheiten näher erläutert. Es zeigen:

Fig. 2    einen Querschnitt durch Lamellen eines Tropfenabscheiders gemäß einer ersten Ausführung der Erfindung;

Fig. 3    in einem Teilschnitt eine Abwandlung der Lamellenausbildung gemäß Fig. 1 im Frontbereich;

Fig. 4    eine andere Ausführung der Lamellen eines Tropfenabscheiders gemäß der Erfindung;

Fig. 5    eine weitere Ausführung der Lamellen eines Tropfenabscheiders gemäß der Erfindung;

Fig. 6 eine nochmals abgewandelte Ausführung der Lamellen eines Tropfenabscheiders gemäß der Erfindung.

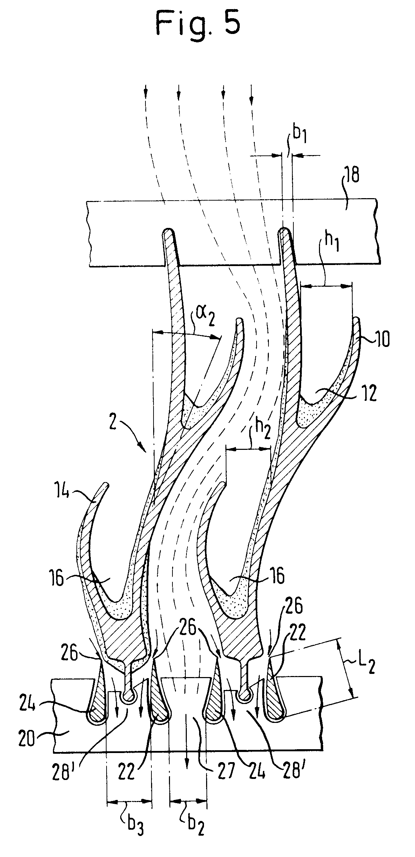

Die Figuren zeigen unterschiedliche Konfigurationen von Tropfenabscheidern gemäß der Erfindung mit der Eintrittsebene E, der Austrittsebene A, der Lamellenteilung T, der Lamellengesamtlänge L, Höhen der Fangtaschenöffnungen $h_1$ (erste Fangtasche) und $h_2$ (zweite Fangtasche), Krümmungsradien $r_1$ bis $r_4$ von verschiedenen Bereichen der Lamelle, Breite $b_1$ der Orthogonal-Projektion des Frontbereiches der Lamelle, Breite $b_2$ des Hauptströmungskanals im Austrittsbereich und Breite $b_3$ eines beruhigten Strömungsbereiches auf der Austrittsseite der Lamellen (vgl. Fig. 5), ferner mit Rücklage $l_1$ der Eintrittskante der Fangschaufel der ersten Fangtasche, Rücklage $l_2$ des Abzweigpunktes dieser Fangschaufel der Lamelle und Rücklage $l_3$ der Eintrittskante der zweiten Fangschaufel.

Das Verhältnis Lamellenteilung T zur Lamellengesamtlänge L ist entsprechend der geforderten Abscheidecharakteristik zu wählen.

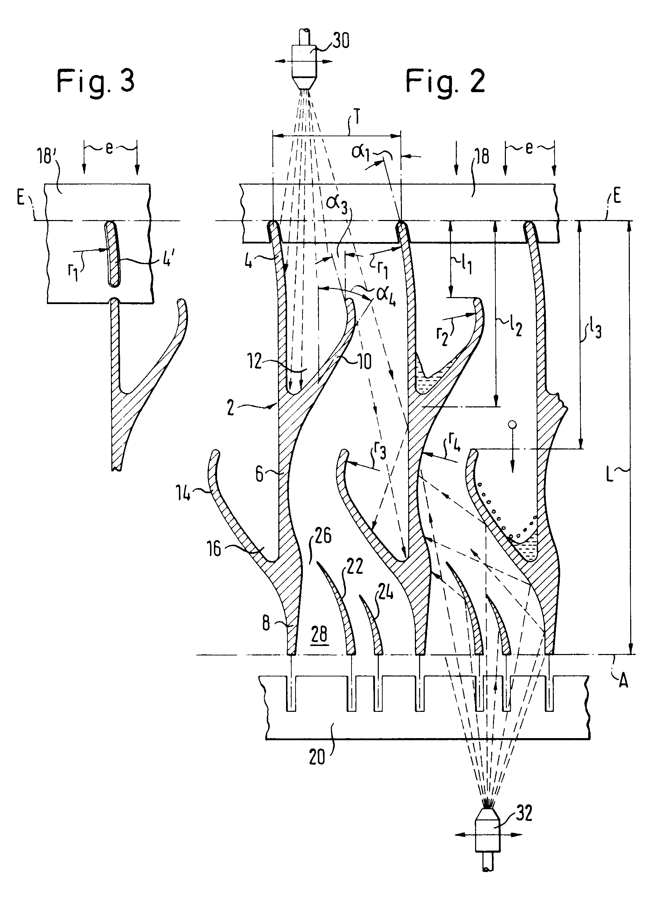

Der Winkel $\alpha_1$ gibt die Neigung der Tangente an die Mittellinie der Lamelle in deren Frontbereich bezüglich der Senkrechten zur Eintrittsebene E an (Fig. 2). Um eine störende Tropfenreflexion an der Lamelle zu vermeiden, sollte $\alpha_1$ relativ klein gehalten werden.

Der Winkel $\alpha_2$ beschreibt die Neigung der Hauptlamelle zur Senkrechten auf die Eintrittsebene E im Wendepunkt der Lamellenkrümmung (Fig. 5, Tangente an den Wendepunkt).

Der Winkel $\alpha_3$ gibt die Neigung der Tangente an die Mittellinie der ersten Fangschaufel bezüglich der Senkrechten auf die Eintrittsebene an. Im übrigen gilt das bezüglich Winkel $\alpha_1$ Gesagte.

Der Winkel $\alpha_4$ gibt die Neigung der Tangente an den Wendepunkt der ersten Fangschaufel bezüglich der Senkrechten auf die Eintrittsebene E an. Dieser Winkel ist in Anpassung an das gewählte Verhältnis T/L zu dimensionieren.

Größen- und Winkelbereiche sowie bevorzugte Werte für die oben angegebenen Werte sind in der folgenden Tabelle 1 angegeben. Die oben angegebenen und in der Tabelle 1 zahlenmäßig umschriebenen Wertebereiche sind auf alle Ausführungsbeispiele zu lesen.

Im folgenden sind weitere Merkmale dieser Ausführungsbeispiele beschrieben, insbesondere auch im Hinblick auf die Unterschiede zwischen den Ausführungsbeispielen. Gleichwohl sind der einfachheitshalber gleiche Bezugszeichen für gleiche oder funktionsgleiche Teile verwendet.

Jede insgesamt mit den Bezugszeichen 2 bezeichnete Lamelle hat einen unter dem Winkel $\alpha_1$ leicht angestellten Frontbereich 4, einen im wesentlichen senkrecht zur Eintrittsebene verlaufenden Mittelbereich 6 und einen Austrittsbereich 8. Im Frontbereich 4 zweigt von der einen Seite der Lamelle 2 eine erste Fangschaufel 10 zur Bildung einer ersten Fangtasche 12 ab, die im Frontbereich unter einem Winkel $\alpha_3$ angestellt ist, während sie im Bereich des Wendepunktes ihrer Krümmung unter einem Winkel $\alpha_4$ bezüglich der Senkrechten zur Eintrittsebene E verläuft Eine zweite Fangschaufel 14 zweigt von einer Stelle zwischen dem Mittelbereich 6 und dem Austrittsbereich 8 von der anderen Seite der Lamelle 2 ab, um eine Fangtasche 16 zu bilden. Der Frontbereich der Fangschaufel 14 sowie die Tangente an den Wendepunkten sind unter gleichen Winkeln $\alpha_3$ bzw. $\alpha_4$ wie bei der ersten Fangschaufel 10 geneigt, jedoch entgegengesetzt dazu.

Die Frontbereiche 4 sämtlicher Lamellen sind in einem eintrittsseitigen Distanzhalter 18 gehalten, während die Austrittsbereiche 8 der Lamelle in einem austrittsseitigen Distanzhalter 20 gehalten sind. In diesem Austrittsbereich sind zwischen zwei benachbarten Lamellen ein größerer Endflügel 22 und daneben ein kleinerer Endflügel 24 angeordnet. Hierdurch wird eine Engstelle 26 gebildet durch die auf dem Rücken der Lamelle gelangte Flüssigkeit durchtreten und abströmen kann. Hinter der Engstelle erweitert sich der Kanal zwischen der Lamelle 2 und dem Endflügel 22 so weit, daß sich die Gasgeschwindigkeit stark verzögert und die Flüssigkeit in dem so gebildeten strömungsberuhigten Raum 28 aufgrund der Schwerkraftwirkung abfließen kann, welche durch vertikale oder mindestens mit einer vertikalen Komponente geneigte Anordnung der Lamellen zustandekommt.

Der Tropfenabscheider gemäß allen Figuren wird in der Regel in Richtung der Pfeile e von dem flüssigkeitsbeladenen Gas angeströmt. Dabei ist ersichtlich, daß die Orthogonal-Projektion der Öffnungen der Taschen 12 und 16 praktisch die gesamte Breite (entsprechend der Teilung T) der Eintrittsebene überdeckt, so daß der wesentliche Teil der großen Tropfen in den Fangtaschen 12, 16 gefangen wird.

Außerdem lassen sich die Fangtaschen 12, 16 durch einen Spülstrahl reinigen, der sich mittels einer parallel zur Eintrittsebene beweglichen Flachstrahldüse 30 einbringen läßt.

Auf der Austrittsseite kann ebenfalls eine Flachstrahldüse 32 parallel zur Austrittsebene A beweglich angeordnet sein, um die Endflügel 22, 24 und die Lamellenwände im Austrittsbereich zu spülen und von schädlichen Ablagerungen bzw. Inkrustierungen freizuhalten.

Die beschriebenen Spülvorgänge können auch in Betrieb, d.h. bei wirksamer Durchströmung in Pfeilrichtung e erfolgen.

Die Ausführung nach Fig. 3 unterscheidet sich von derjenigen nach Fig. 2 lediglich dadurch, daß der unter dem Winkel $\alpha_1$ geneigte und mit dem Radius $r_1$ gekrümmte Frontbereich, der um die Länge $l_1$ gegenüber der Spitze der ersten Fangschaufel 10 vorsteht, als gesonderte Frontlamelle 4' ausgebildet ist, die von der Lamelle 2 gesondert im eintrittsseitigen Distanzhalter 18' gehaltert ist.

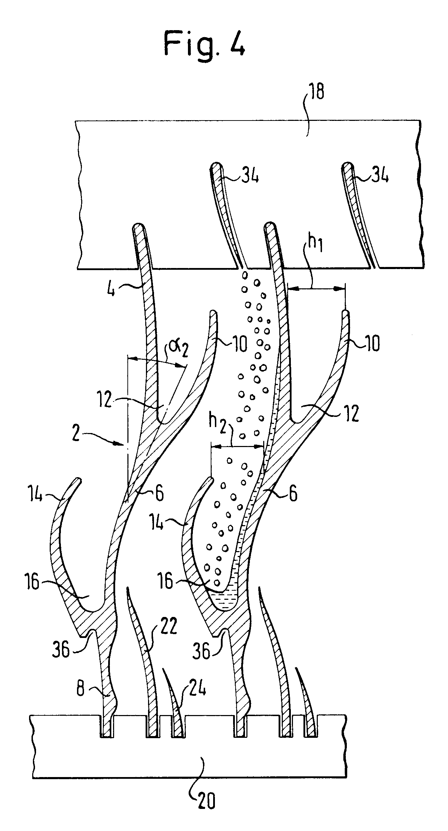

Die Ausführung nach Fig. 4 unterscheidet sich von derjenigen nach den Fig. 2 und 3 zunächst dadurch, daß die Lamelle 2 sinusartig gewellt ist, wobei sie im Wendepunkt bezüglich der Senkrechten zur Eintrittsebene unter einem von Null verschiedenen Winkel $\alpha_2$ geneigt ist.

Ferner ist im Eintrittsbereich jeweils zwischen zwei Lamellen ein Vorflügel 34 im Distanzhalter 18 für die Lamellen gehaltert. Dieser Vorflügel richtet die eintretende Strömung so, daß die Tropfen gezielt in die Tasche 16 gelenkt werden, soweit sie nicht schon in Tasche 12 aufgefangen wurden. Insbesondere werden von der Hinterkante des Vorflügels 34 abgerissene Tropfen in die Tasche 16 gelenkt.

Ein weiterer Unterschied der Ausbildung nach Fig. 4 besteht darin, daß auf der Rückseite der zweiten Fangtasche 16 eine Fangrinne 36 zum Ableiten von abfließenden Flüssigkeitssträhnen vorgesehen ist.

Die Ausführung nach Fig. 5 unterscheidet sich von derjenigen nach Fig. 4 hauptsächlich durch eine andere Ausgestaltung im Austrittsbereich 8. Hier sind die Endflügel 22 und 24 so angeordnet und profiliert, daß sich der Querschnitt des Hauptströmungskanals zum Austritt hin düsenartig verjüngt. Die dadurch bei angepaßter Dimensionierung erzeugte Druckverteilung bewirkt, daß ein geringer Gasstrom an den Engstellen 26 zwischen den Endflügeln und der Lamelle 2 durchtritt und den Flüssigkeitsfilm in den strömungsberuhigten Raum 28' zwischen den Endflügeln 22, 24 und der Lamelle 2 befördert, wo er ungestört unter Schwerkrafteinfluß abfließen kann. Ersichtlich ist auch diese Ausführung sowohl von der Eintrittsseite her als von der Austrittsseite her bequem und direkt durch Spülstrahlen abreinigbar.

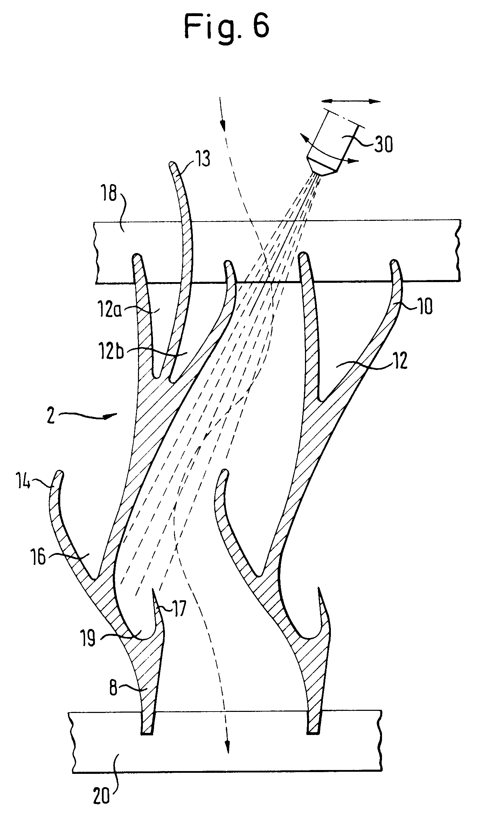

Bei der Ausführung nach Fig. 6 ist in Strömungsrichtung hinter der zweiten Fangtasche 16 eine kleine dritte Fangtasche 19 vorgesehen, deren Fangschaufel 17 vom Austrittsbereich 8 der Lamelle 2 von der gleichen Seite wie die erste Fangschaufel 10 abgezweigt ist. Die Anordnung ist so getroffen, daß auch diese dritte Fangschaufel leicht von der Eintrittsseite her gereinigt werden kann, wobei in diesem Fall allerdings eine schräge Anstellung der parallel zur Eintrittsebene beweglichen Flachstrahldüse 30 erforderlich ist, um den Spülstrahl voll in die Fangtasche 17 zu richten.

Die linke Lamelle 2 in Fig. 6 zeigt eine Abwandlung mit einer zungenartigen Verlängerung 13 des Hauptzweiges der Lamelle 2 nach vorn über den Distanzhalter 18 hinaus, wobei die Verlängerung die vordere Tasche in eine linke und eine rechte Hälfte 12a, 12b unterteilt.

**Patentansprüche**

1. Tropfenabscheider mit Lamellen, welche Fangtaschen für aus einer feststoff- und/oder flüssigkeitsbeladenen Gasströmung abzuscheidende Tropfen aufweisen, dadurch **gekennzeichnet**, daß jede Lamelle (2) wenigstens zwei Fangtaschen (12, 16) hat, welche derart angeordnet sind, daß ihre Orthogonal-Projektion auf die Eintrittsebene (E) das Strömungsfeld im wesentlichen überdeckt.

2. Tropfenabscheider, insbesondere nach Anspruch 1, dadurch **gekennzeichnet**, daß im Bereich der Hinterkante der Lamellen (2) Endflügel (22, 24) angeordnet sind, welche nach hinten offene, strömungsberuhigte Bereiche (28') für die Flüssigkeitsableitung bilden, die mit einem Spülstrahl von der Austrittsseite her abreinigbar sind.

3. Tropfenabscheider nach Anspruch 2, dadurch **gekennzeichnet**, daß die Endflügel (22, 24) bezüglich der Lamellen (2) so angeordnet sind, daß die an den Lamellen (2) abgeschiedene Flüssigkeit in die strömungsberuhigten Bereiche (28') hineingesaugt wird.

4. Tropfenabscheider nach Anspruch 2 oder 3, dadurch **gekennzeichnet**, daß je Lamelle (2) nur ein Endflügel (22) vorgesehen ist.

5. Tropfenabscheider nach Anspruch 2 oder 3, dadurch **gekennzeichnet**, daß je Lamelle (2) zwei Endflügel (22, 24) vorgesehen sind, wobei diese Endflügel (22, 24) vorzugsweise so profiliert und angestellt sind, daß sich der Querschnitt des Hauptströmungskanals (27) zwischen zwei benachbarten Endflügeln düsenartig verjüngt.

6. Tropfenabscheider nach einem der Ansprüche 1 bis 5, dadurch **gekennzeichnet**, daß jede Lamelle (2) einen Frontbereich (4) aufweist, welcher gegenüber den übrigen Teilen der Lamelle um 0,5 - 2 Lamellenteilungen nach vorne in Richtung entgegen der Anströmrichtung (e) vorsteht.

7. Tropfenabscheider nach Anspruch 6, dadurch **gekennzeichnet**, daß der Frontbereich als eine von der Lamelle gesonderte Frontlamelle (4') ausgeführt ist, die mit der Lamelle (2) in einem gemeinsamen anströmseitigen Distanzhalter (18') gehalten ist.

8. Tropfenabscheider nach Anspruch 1, dadurch **gekennzeichnet**, daß jede Lamelle (2) drei Fangtaschen (12, 16, 19) aufweist, die so angeordnet sind, daß sie sämtlich von der Eintrittsseite des Tropfenabscheiders her mit gegebenenfalls im Winkel verstellbaren Flachstrahldüsen (30) direkt abreinigbar sind.

9. Tropfenabscheider nach einem der Ansprüche 1 bis 8, dadurch **gekennzeichnet**, daß die in Anströmrichtung erste Fangtasche (12) im Frontabschnitt der Lamelle (2) angebracht ist.

10. Tropfenabscheider nach Anspruch 9, dadurch **gekennzeichnet**, daß beidseitig vom Frontabschnitt jeder Lamelle Fangtaschen (12, 16) angeordnet sind.

11. Tropfenabscheider nach einem der Ansprüche 1 bis 10, dadurch **gekennzeichnet**, daß auf der Anströmseite zwischen benachbarten Lamellen (2) wenigstens ein Vorflügel (34) so angeordnet ist, daß er die Tropfen in gut abreinigbare Bereiche der Lamellen lenkt.

12. Tropfenabscheider nach Anspruch 11, dadurch **gekennzeichnet**, daß der Vorflügel (34) auf der Anströmseite des Tropfenabscheiders in einem anströmseitigen Distanzhalter (18) fixiert ist.

13. Tropfenabscheider nach einem der Ansprüche 1 bis 11, dadurch **gekennzeichnet**, daß die Lamellen (2) als Hohlprofile ausgebildet und innen von Wasser einer Temperatur unterhalb des Taupunktes des durch den Tropfenabscheider strömenden Gases beaufschlagt sind.

# Fig.1

# Fig. 3

# Fig. 2

# Fig. 4

# Fig. 5

# Fig. 6

Europäisches
Patentamt

**EUROPÄISCHER RECHERCHENBERICHT**

Nummer der Anmeldung

EP    92 10 9494

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | FR-A-2 154 580 (REGEHR ULRICH,) <br> * Seite 4, Zeile 9 - Zeile 19; Abbildung 3 * <br> --- | 1 | B01D45/08 <br> B01D45/10 |
| A | US-A-3 815 336 (H. GREGOR RIGO,) <br> * Spalte 6 - Spalte 7; Ansprüche 1-3; Abbildungen 2-4 * <br><br> ----- | 13 | |
| | | | **RECHERCHIERTE SACHGEBIETE (Int. Cl.5 )** <br><br> B01D |

Der vorliegende Recherchenbericht wurde für alle Patentansprüche erstellt

| Recherchenort | Abschlußdatum der Recherche | Prüfer |
|---|---|---|
| DEN HAAG | 29 JULI 1992 | PYFFEROEN K. |